# EUROPÄISCHE PATENTSCHRIFT

(11) **EP 3 670 892 B1**
(45) Veröffentlichungstag und Bekanntmachung des Hinweises auf die Patenterteilung: **29.01.2025**
(21) Anmeldenummer: 19213159.7
(22) Anmeldetag: 03.12.2019
(51) Int. Cl.: F02M 15/00, F01P 1/06, F01P 5/06, F02M 17/04, F02M 31/04, F01P 1/02, F02F 1/34, F02M 35/06, F02M 35/10, F02B 63/02

(54) **ARBEITSGERÄT MIT VERBRENNUNGSMOTOR MIT VERGASER-KÜHLUNG**
WORKING DEVICE WITH COMBUSTION ENGINE WITH CARBURETTOR COOLING
APPAREIL DE TRAVAIL AVEC MOTEUR À COMBUSTION INTERNE AVEC REFROIDISSEMENT CARBURATEUR

(30) Priorität: 20.12.2018 DE 102018133087
(43) Veröffentlichungstag der Anmeldung: 24.06.2020
(73) Patentinhaber: Wacker Neuson Produktion GmbH & Co. KG, 85084 Reichertshofen (DE)
(72) Erfinder: BACHMANN, Matthias, 86753 Möttingen (DE); GALLE, Steffen, 84034 Landshut (DE)
(74) Vertreter: Müller Hoffmann & Partner

(56) Entgegenhaltungen:
- DE-A1- 102009 008 055
- DE-A1- 3 604 166
- DE-B- 1 281 138
- US-B2- 9 016 246

## Beschreibung

Die Erfindung betrifft ein Arbeitsgerät mit einem Verbrennungsmotor gemäß Anspruch 1.

Verbrennungsmotoren, insbesondere Zweitakt- oder Viertaktmotoren sind in vielfältigen Ausprägungen bekannt. In einer besonderen Anwendung haben sich Zweitaktmotoren zum Antrieb von Arbeitsgeräten, wie zum Beispiel Stampfern zur Bodenverdichtung oder motorbetriebenen Bohr- und/oder Schlaghämmern bewährt.

Üblicherweise weist ein derartiger Verbrennungsmotor einen oder mehrere Zylinder auf, in denen jeweils ein Kolben axial hin und her beweglich ist, um eine Motorwelle (Kurbelwelle) drehend anzutreiben. Die Kurbelwelle ist ihrerseits in einem Kurbelgehäuse gelagert, wobei zusätzliche Schmiereinrichtungen vorgesehen sein können.

Zweitaktmotoren weisen einen Vergaser, zum Beispiel einen Membranvergaser, auf, mit dem das für die Verbrennung erforderliche Luft-Kraftstoff-Gemisch in bekannter Weise erzeugt wird. Die Membranvergaser sind in der Regel in der Nähe des Zylinders an der Außenseite befestigt und werden mittels natürlicher Konvektion gekühlt. Zur Kühlung des Zylinders ist meist ein Ventilator vorgesehen, der einen Luftstrom erzeugt, der über den Zylinder und das Kurbelgehäuse geführt wird.

Typische Membranvergaser sind derart aufgebaut, dass sie eine Membranseite und eine Ventilseite aufweisen, zwischen denen ein Luftkanal geführt wird, über den die Verbrennungsluft für den Zylinder zugeführt wird. Mithilfe des Vergasers wird Kraftstoff im Luftkanal beigemischt, so dass ein Luft-Kraftstoff-Gemisch entsteht, das nachfolgend zum Brennraum im Zylinder geführt werden kann.

Aus der US 9,016,246 B2 und der DE 10 2009 008 055 A1 ist jeweils ein handgeführtes Arbeitsgerät mit einem Verbrennungsmotor bekannt, bei dem für einen Winterbetrieb ein Teil der Kühlluft an den Kühlrippen des Motorzylinders vorgewärmt und nachfolgend in den Vergaser geführt wird, um den Vergaser zu erwärmen. Eine ähnliche Lösung ist in der DE 36 04 166 A1 beschrieben.

In der DE 1 281 138 B wird eine Motorkettensäge offenbart, bei der ein Vergaserkasten im Motorgehäuse angeordnet werden kann.

Bei hohen Außentemperaturen, zum Beispiel bei einem Betrieb des Verbrennungsmotors auf einer sonnenbeschienenen Baustelle, wird der Vergaser stark erwärmt. Die natürliche Konvektion reicht dann unter Umständen nicht mehr aus, um das Entstehen von Dampfblasen im Kraftstoffsystem durch Verdampfen von Kraftstoff zu verhindern. Wenn jedoch Dampfblasen im Kraftstoffsystem, insbesondere in der Kraftstoffzuführung entstehen, wird die Saugwirkung der Membranpumpe in dem Vergaser verringert oder gar vollständig aufgehoben, so dass kein Kraftstoff mehr gefördert werden kann. Der Zweitaktmotor stoppt daraufhin aufgrund akuten Kraftstoffmangels.

Der Erfindung liegt daher die Aufgabe zugrunde, ein Arbeitsgerät mit einem Verbrennungsmotor anzugeben, bei dem die Gefahr der Bildung von Dampfblasen im Kraftstoffsystem verringert werden kann.

Die Aufgabe wird erfindungsgemäß durch ein Arbeitsgerät mit einem Verbrennungsmotor mit den Merkmalen von Anspruch 1 gelöst. Vorteilhafte Ausgestaltungen sind in den abhängigen Ansprüchen angegeben.

Es wird ein Verbrennungsmotor angegeben, mit einem Zylinder, in dem ein Kolben axial hin und her beweglich ist, um eine Motorwelle drehend anzutreiben, einer Vergasereinrichtung zum Erzeugen eines Luft-Kraftstoff-Gemisches für einen Verbrennungsvorgang in dem Zylinder, einer Lüftereinrichtung zum Erzeugen eines Kühlluftstroms, einer Kühlluftführung zum Führen des von der Lüftereinrichtung erzeugten Kühlluftstroms, einem Strömungsteiler zum Aufteilen des Kühlluftstroms in einen Zylinder-Kühlluftstrom und in einen Vergaser-Kühlluftstrom, einer Zylinder-Kühlluftstromführung zum Führen des Zylinder-Kühlluftstroms zu einer Außenwand des Zylinders, und mit einer Vergaser-Kühlluftstromführung zum Führen des Vergaser-Kühlluftstroms zu einer Außenwand der Vergasereinrichtung.

Der Verbrennungsmotor kann insbesondere ein Zweitaktmotor sein und mit dem Zylinder, dem Kolben und der Motorwelle einen bekannten Aufbau aufweisen. Ein derartiger Zweitaktmotor mit einem Zylinder hat sich z.B. zum Antrieb eines Arbeitsgeräts bewährt.

Die Vergasereinrichtung dient in an sich bekannter Weise zum Erzeugen des Luft-Kraftstoff-Gemischs. Dazu hat sich zum Beispiel ein Membranvergaser mit an sich bekanntem Aufbau bewährt. Ein Membranvergaser hat den Vorteil, dass er durch die Druckpulse im Ansaugbereich des Motors betrieben wird und dadurch in jeder Lage funktioniert, was zum Beispiel bei einem Schwimmervergaser nicht gewährleistet ist.

Bei der Lüftereinrichtung handelt es sich um ein an sich bekanntes Gebläse bzw. einen als Lüfterrad dienenden Ventilator (zum Beispiel einen Radialventilator). Der Antrieb der Lüftereinrichtung kann direkt über die Motorwelle (Kurbelwelle) erfolgen, so dass das Lüfterrad direkt auf der Motorwelle befestigt sein kann.

Erfindungsgemäß wird der von der Lüftereinrichtung erzeugte Gesamt-Kühlluftstrom an dem Strömungsteiler aufgeteilt, so dass nachfolgend zwei Kühlluftströme, der Zylinder-Kühlluftstrom und der Vergaser-Kühlluftstrom, weitergeführt werden. Die beiden Kühlluftströme werden getrennt voneinander zu der jeweils angestrebten Stelle (dem zu kühlenden Ziel der Ströme) geführt werden, um sowohl den Zylinder als auch den Vergaser effektiv zu kühlen.

Dabei wird mehr als 80% des von der Lüftereinrichtung erzeugten (Gesamt-) Kühlluftstroms als Zylinderkühlluftstrom weitergeführt werden, während der Rest des (Gesamt-)Kühlluftstroms als Vergaser-Kühlluftstrom weitergeführt werden kann. Da die Wärmeentwicklung am Zylinder wesentlich größer ist, da dort durch die Verbrennung eigene Wärme erzeugt wird, kann der Zylinder-Kühlluftstrom auch noch größer gewählt werden und zum Beispiel ca. 90% des Gesamt-Kühlluftstroms aufweisen. Für die Kühlung des Vergasers ist hingegen ein kleinerer Vergaser-Kühlluftstrom ausreichend.

Die Luftströme durch die Zylinder-Kühlluftstromführung und die Vergaser-Kühlluftstromführung können jeweils um 90° umgelenkt werden. Die Umlenkung um 90° kann aber auch bereits kurz vor dem Strömungsteiler erfolgen, wenn die beiden Ströme noch nicht geteilt sind. Mit der Umlenkung der Luftströmung um 90° kann erreicht werden, dass einerseits der Zylinder-Kühlluftstrom exakt zwischen die an der Außenwand des Zylinders vorgesehenen Kühlrippen geführt wird, um die Kühlung des Zylinders optimal zu bewirken. Andererseits kann der Vergaser-Kühlluftstrom zielgerichtet auf den Vergaser geleitet werden.

Die Kühlluftführung kann einen Gebläsedeckel aufweisen, wobei der Gebläsedeckel wenigstens teilweise die Lüftereinrichtung umschließt und wobei in dem Gebläsedeckel die Zylinder-Kühlluftstromführung und die Vergaser-Kühlluftstromführung ausgebildet sind. Der Gebläsedeckel kann aus Metall, aus Kunststoff oder aus beiden Materialien aufgebaut sein. Wenn die beiden Kühlluftstromführungen in dem Gebläsedeckel ausgebildet sind, sind keine weiteren baulichen Maßnahmen an dem Verbrennungsmotor erforderlich, um einerseits die Teilung des Gesamt-Kühlluftstroms zu bewirken und andererseits die beiden getrennten Kühlluftströme präzise an den Ort zu führen, an dem die Kühlung bewirkt werden soll.

Zwischen dem Zylinder und der Vergasereinrichtung kann eine Trennwand vorgesehen sein, zum Aufrechterhalten der Trennung des Vergaser-Kühlluftstroms von dem Zylinder-Kühlluftstrom. Die Trennwand kann zum Beispiel als Abdeckung zwischen dem Zylinder und dem Vergaser angeordnet sein. Mit ihrer Hilfe ist es möglich, die beiden Kühlluftströme auch dann noch voneinander getrennt zu halten und ihrem eigentlichen Ziel zuzuführen, wenn die im Gebläsedeckel ausgebildete Zylinder-Kühlluftstromführung und die Vergaser-Kühlluftstromführung nicht mehr wirksam sind, weil der jeweilige Kühlluftstrom bereits am Gebläsedeckel ausgetreten ist.

Die Vergasereinrichtung kann einen Kraftstoff führenden Bereich aufweisen, der durch eine Vergaser-Außenwand abgedeckt ist, wobei der Vergaser-Kühlluftstrom derart geführt ist, dass er auf die Vergaser-Außenwand trifft. Dabei kann es insbesondere vorteilhaft sein, wenn er senkrecht auf die Vergaser-Außenwand trifft. Aber auch eine parallele oder schräge Anströmung der Vergaser-Außenwand kann zweckmäßig sein, wenn auf diese Weise bei entsprechenden baulichen Gegebenheiten des Vergasers die Wärme wirksam abgeführt werden kann.

Die Vergasereinrichtung, insbesondere in einer Ausbildung als Membranvergaser, weist eine mit der Kraftstoffzuleitung verbundene Kammer bzw. Leitung (den Kraftstoff führenden Bereich) auf. Beim Betrieb der Vergasereinrichtung entsteht hier ein leichter Unterdruck, um eine Saugwirkung auf den Kraftstoff auszuüben und damit eine Pumpwirkung zu erreichen. Wenn sich in diesem Bereich - wie oben einleitend erläutert - Dampfblasen bilden, kann kein Unterdruck erzeugt und damit keine Pumpwirkung erreicht werden. Durch das gezielte Kühlen der Außenwand des Vergasers mit Hilfe des Vergaser-Kühlluftstroms kann die Gefahr einer Bildung von Dampfblasen erheblich verringert werden.

Die Lüftereinrichtung kann ein Lüfterrad aufweisen, wobei das Lüfterrad in einer ersten Ebene liegen kann und wobei die Vergasereinrichtung, der Zylinder und ein den Zylinder bildendes Kurbelgehäuse in einer zu der ersten Ebene parallelen zweiten Ebene angeordnet sein können. Die Vergasereinrichtung, der Zylinder und das Kurbelgehäuse können dementsprechend in einer gemeinsamen Ebene liegen, die sich von der (ersten) Ebene des Lüfterrads unterscheidet. Durch diese Anordnung kann von dem Lüfterrad eine - bezogen auf die Längsachse des Zylinders - Querströmung erzeugt werden, die dann seitlich auf die Vergasereinrichtung und den Zylinder trifft. Insbesondere erfolgen dabei der Vergaser-Kühlluftstrom und der Zylinder-Kühlluftstrom mit senkrechter Strömungsrichtung auf die zweite Ebene.

Durch die Motorwelle kann eine Arbeitsvorrichtung antreibbar sein, wobei wirkungsmäßig zwischen der Motorwelle und der Arbeitsvorrichtung eine Kupplung vorgesehen sein kann, zum Unterbrechen oder Schließen eines Drehmomentflusses von der Motorwelle zu der Arbeitsvorrichtung, und wobei die Kupplung in einer zu der ersten und der zweiten Ebene parallelen dritten Ebene angeordnet sein kann. Die Arbeitsvorrichtung kann zum Beispiel ein Schlagwerk oder ein Stampfwerk sein. Bei der Kupplung kann es sich zum Beispiel um eine Fliehkraftkupplung handeln, die bei Überschreiten einer gewissen Drehzahl (Schaltdrehzahl) den Drehmomentfluss von der Motorwelle zu der Arbeitsvorrichtung schließt. Der Bediener hat damit die Möglichkeit, durch Erhöhen der Drehzahl aus dem Leerlauf die Arbeitsvorrichtung in Gang zu versetzen.

Der Verbrennungsmotor wird bei einem Arbeitsgerät eingesetzt.

Bei dem Arbeitsgerät handelt es sich um eine Stampfvorrichtung zur Bodenverdichtung mit einem entsprechenden Stampfwerk oder um einen motorbetriebener Bohr- und/oder Schlaghammer mit einem Schlagwerk.

Das Arbeitsgerät kann ein handgehaltenes oder handgeführtes Arbeitsgerät sein, wobei der Vergaser-Kühlluftstrom und der Zylinder-Kühlluftstrom bei einem bestimmungsgemäßen Gebrauch des Arbeitsgeräts von einem das Arbeitsgerät haltenden Bediener weggeführt wird. Das bedeutet, dass die beiden Kühlluftströme nicht auf den Bediener treffen, der das Arbeitsgerät hält. Das ist nicht nur deswegen komfortabel, weil die Kühlluftströme insgesamt aufgrund ihrer Gebläsewirkung unangenehm wären. Ebenso wird der Bediener auch davor geschützt, durch die dann erwärmten Kühlluftströme seinerseits unerwünscht erwärmt zu werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: eine Seitenansicht eines erfindungsgemäßen Verbrennungsmotors;
- **Fig. 2**: eine Vorderansicht des Verbrennungsmotors von Fig. 1;
- **Fig. 3**: eine Schnittdarstellung entlang des Schnitts A-A des Verbrennungsmotors von Fig. 1;
- **Fig. 4**: eine Detailvergrößerung des Verbrennungsmotors von Fig. 1; und
- **Fig. 5**: eine Variante des Verbrennungsmotors.

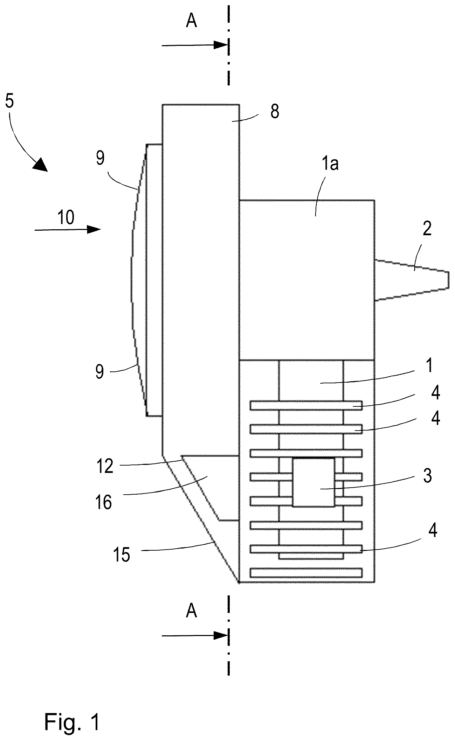

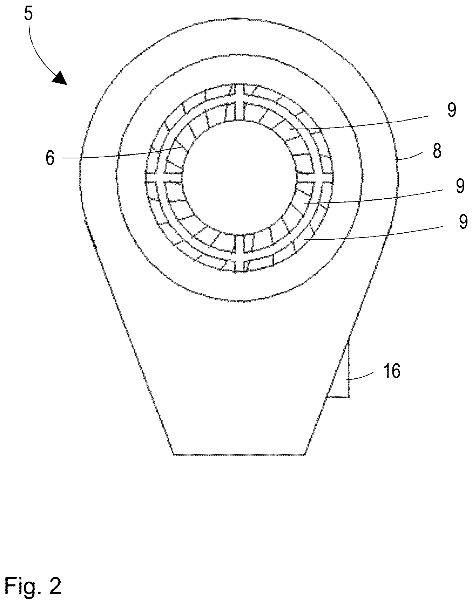

Die Fig. 1 bis 4 zeigen einen erfindungsgemäßen Verbrennungsmotor in verschiedenen Darstellungen. Der Verbrennungsmotor ist als Zweitaktmotor ausgebildet und kann vorteilhaft in verschiedenen Arbeitsgeräten, wie insbesondere Stampfern zur Bodenverdichtung oder motorbetriebenen Hämmern (Abbruchhämmer, Bohr- und/oder Schlaghämmer) zum Antreiben einer entsprechenden Arbeitsvorrichtung (erfindungsgemäß ein Stampfwerk oder Schlagwerk) genutzt werden.

Der Verbrennungsmotor weist einen Zylinder 1 mit einem Zylindergehäuse auf, in dem ein nicht dargestellter Kolben axial hin und her beweglich ist, um über ein Pleuel und eine Kurbelwelle eine mit der Kurbelwelle gekoppelte Motorwelle 2 drehend anzutreiben. Dabei schließt sich an den Zylinder 1 ein Kurbelgehäuse 1a an, in dem die Kurbelwelle/Motorwelle 2 gelagert ist. Die Kurbelwelle und die Motorwelle 2 können einstückig miteinander verbunden sein. Der Aufbau eines derartigen Verbrennungsmotors ist seit langem bekannt, so dass sich an dieser Stelle eine eingehendere Beschreibung zu Aufbau und Funktionsweise erübrigt.

In dem Zylinder 1 wird ein Luft-Kraftstoff-Gemisch verbrannt, um die Bewegung des Kolbens zu bewirken. Dieses Luft-Kraftstoff-Gemisch wird von einem als Vergasereinrichtung dienenden Vergaser 3 erzeugt und in das Innere des Zylinders 1 gefördert.

Der Vergaser 3 ist typischerweise als sogenannter Membranvergaser ausgeführt.

Membranvergaser haben sich für den vorgesehenen Einsatzzweck bewährt, da sie in jeder Raumlage und in jeder Neigung zuverlässig eingesetzt werden können. Anders als bei zum Beispiel Schwimmervergasern ist es für einen Membranvergaser nicht erforderlich, ihn stets in einer horizontalen Ausrichtung zu betreiben.

Auch der Aufbau eines Membranvergasers ist bekannt, so dass sich eine detaillierte Beschreibung erübrigt. Prinzipiell beruht die Funktion eines Membranvergasers darauf, dass durch die durch den Kolben im Ansaugtrakt des Motors bewirkten Druckschwankungen eine Luftseite einer Membran beaufschlagt wird, die sich entsprechend den Druckschwankungen bewegt. Auf der gegenüberliegenden Seite der Membran ist die Kraftstoffseite vorgesehen. Durch die Bewegung der Membran wird ein Pumpeffekt bewirkt, so dass mit Hilfe von geeigneten Rückschlagventilen (zum Beispiel Flatterventilen) Kraftstoff aus einer Kraftstoffversorgung angesaugt und weiterbefördert wird. Der Kraftstoff wird schließlich in einem in dem Vergaser 3 vorgesehenen Luftkanal eingespritzt, so dass sich das Luft-Kraftstoff-Gemisch bildet. Durch die Bewegung des Kolbens und die damit verbundene Saugwirkung wird wiederum das Luft-Kraftstoff-Gemisch in die Verbrennungskammer im Inneren des Zylinders 1 gesaugt, wo daraufhin die Verdichtung und Verbrennung des Gemischs erfolgt.

Beim Betrieb des Verbrennungsmotors entsteht im Inneren des Zylinders 1 erhebliche Verbrennungswärme, die über die Außenwand des Zylinders 1 abgeführt werden muss. Zu diesem Zweck sind an der Außenwand des Zylinders eine Vielzahl von Kühlrippen 4 vorgesehen, die die Wärme von der Außenwand des Zylinders 1 abführen und insgesamt die Kühlfläche vergrößern.

Die Kühlrippen 4 werden von einer Luftströmung angeströmt, um die Kühlwirkung zu erhöhen.

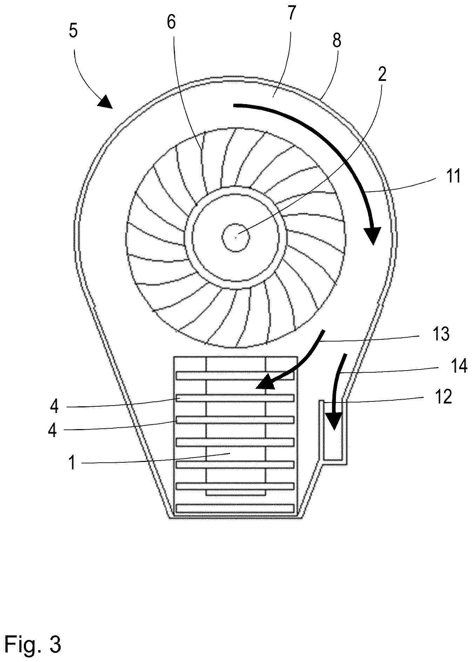

Zu diesem Zweck ist in dem Verbrennungsmotor eine Lüftereinrichtung 5 mit einem als Lüfterrad dienenden Ventilator 6 und einer Kühlluftführung 7 vorgesehen. Der Ventilator 6 kann insbesondere als Radialventilator ausgebildet sein, wie Fig. 3 zeigt.

Wie aus Fig. 1 ersichtlich, liegt der Ventilator 6 im Inneren des Gebläsedeckels 8 in einer ersten Ebene, während der Vergaser 3, der Zylinder 1 mit dem nicht dargestellten Kolben sowie dem Kurbelgehäuse 1a in einer gemeinsamen zweiten Ebene liegen, die parallel zu der ersten Ebene liegt. Der Antrieb einer nicht dargestellten Arbeitsvorrichtung erfolgt über eine ebenfalls nicht dargestellte optionale Fliehkraftkupplung, die am Ende der Motorwelle 2 (rechtsseitiges Ende in Fig. 1) aufgesteckt sein kann und in einer dritten Ebene liegt.

Der Ventilator 6 ist direkt auf der Motorwelle 2 befestigt und dreht sich somit im Betrieb des Verbrennungsmotors automatisch mit der Motordrehzahl mit. Durch die Rotation des Ventilators 6 wird ein Kühlluftstrom erzeugt. Dazu ist der Ventilator 6 wenigstens teilweise von einem Gebläsedeckel 8 umschlossen, der damit einen Teil der Kühlluftführung 7 bildet. Der Gebläsedeckel 8 weist mehrere Lufteinlässe 9 in Form von kreissegmentförmigen Luftschlitzen auf, über die durch den Ventilator 6 Umgebungsluft 10 angesaugt wird.

Der Gebläsedeckel 8 ist somit Teil der Kühlluftführung 7. Im Inneren des Gebläsedeckels 8 entsteht durch die Förderwirkung des Ventilators 6 ein Kühlluftstrom 11, der durch die Kühlluftführung 7 geführt wird.

Der Gebläsedeckel 8 kann gleichzeitig auch als Starterdeckel dienen und zum Beispiel eine Spule umschließen, auf der ein Seil für einen Zugstarter aufgewickelt ist.

Im Inneren des Gebläsedeckels 8 und damit der Kühlluftführung 7 ist ein Strömungsteiler 12 ausgebildet, an dem der Kühlluftstrom 11 in einen Zylinder-Kühlluftstrom 13 und in einen Vergaser-Kühlluftstrom 14 aufgeteilt wird (Fig. 3).

Dabei werden mehr als 80%, zum Beispiel ca. 90%, des gesamten Kühlluftstroms 11 als Zylinder-Kühlluftstrom 13 zu der Außenwand des Zylinders 1 bzw. den Kühlrippen 4 geführt, um eine wirksame Kühlung der Außenwand des Zylinders 1 zu erreichen. Ein sehr viel kleinerer Anteil des gesamten Kühlluftstroms 11, nämlich zum Beispiel ca. 10% des Massenstroms wird als Vergaser-Kühlluftstrom 14 abgezweigt und getrennt von dem Zylinder-Kühlluftstrom 13 zu dem Vergaser 3 geführt. Der Vergaser-Kühlluftstrom 14 und die Vergaser-Kühlluftstromführung 16 bilden insoweit einen Vergaserbypass für den Gesamtluftmassenstrom.

Zur Führung des Zylinder-Kühlluftstroms 13 ist eine Zylinder-Kühlluftstromführung 15 in dem Gebläsedeckel 8 ausgebildet, die insbesondere eine Umlenkung der Luftströmung um 90° bewirkt. Zu diesem Zweck weist die Zylinder-Kühlluftstromführung 15 eine schräge Wand in dem Gebläsedeckel 8 auf, die die Änderung der Strömungsrichtung bewirkt (Fig. 1).

Der Zylinder-Kühlluftstrom 13 strömt nach seiner Umlenkung durch die Zylinder-Kühlluftstromführung 15 im Wesentlichen horizontal durch die Zwischenräume zwischen den Kühlrippen 4, wie aus Fig. 1 ersichtlich. Dadurch wird die durch die Kühlrippen 4 vergrößerte Oberfläche des Zylinders 1 wirkungsvoll angeströmt, so dass eine gute Kühlwirkung erreicht werden kann. Die Luftströmung erfolgt dabei insbesondere quer zur Längsrichtung (Hauptrichtung des Zylinders 1).

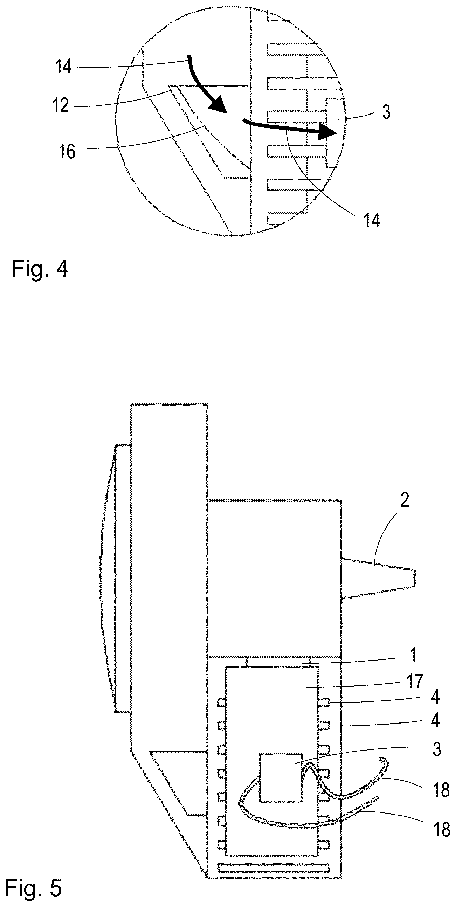

Zur Führung des Vergaser-Kühlluftstroms ist eine Vergaser-Kühlluftstromführung 16 im Inneren und im seitlichen Bereich des Gebläsedeckels 8 vorgesehen, an deren oberer Kante der Strömungsteiler 12 ausgebildet ist und so den Vergaser-Kühlluftstrom 14 als Teilstrom abzweigt (Fig. 1 und 4).

Mit Hilfe der Vergaser-Kühlluftstromführung 16 wird der Vergaser-Kühlluftstrom 14 zielgerichtet zu dem Vergaser 3, insbesondere zu derjenigen Außenwand des Vergasers 3 geführt, hinter der sich die Kraftstoffseite befindet. Dadurch kann gezielt eine Kühlung der Kraftstoffseite des Vergasers 3 erreicht werden, um so auch bei einem Betrieb mit höheren Umgebungstemperaturen einer Bildung von Dampfblasen in der Kraftstoffzuführung vorzubeugen.

Die Vergaser-Kühlluftstromführung 16 ist im Inneren bzw. seitlich des Gebläsedeckels 8 eingesetzt und kann zum Beispiel mit diesem direkt hergestellt werden. Insbesondere kann der Gebläsedeckel 8 aus Kunststoff oder Metall oder einer Kombination von beiden gebildet sein, so dass die zusätzliche Vergaser-Kühlluftstromführung 16 auf der Innenseite des Gebläsedeckels 8 ohne großen Zusatzaufwand herstellbar ist.

Die Vergaser-Kühlluftstromführung 16 weist dazu - analog zu der Zylinder-Kühlluftstromführung 15 - eine schräge Wand auf, die den Vergaser-Kühlluftstrom 14 um 90° umlenkt, damit die Außenwand des Vergasers 3 voll getroffen werden kann (Fig. 4).

Fig. 5 zeigt eine Variante zu dem Verbrennungsmotor der Fig. 1 bis 4.

Die Ausführungsform von Fig. 5 unterscheidet sich von der Ausführungsform der Fig. 1 bis 4 dadurch, dass zwischen dem Vergaser 3 und dem Zylinder 1 bzw. dessen Kühlrippen 4 eine Trennwand 17 angeordnet ist. Die Trennwand 17 dient als Abdeckung zwischen dem Zylinder 1 und dem Vergaser 3 und gewährleistet, dass die beiden Kühlluftströme, nämlich der Zylinder-Kühlluftstrom 13 und der Vergaser-Kühlluftstrom 14 voneinander getrennt sind. Dadurch wird eine Vermischung der beiden Kühlluftströme verhindert, die zu einer turbulenten Strömung führen könnte und insbesondere verhindern könnte, dass der Vergaser-Kühlluftstrom 14 auch tatsächlich den Vergaser 3 erreicht.

Die Trennwand 17 ergänzt somit die beiden Kühlluftstromführungen 15, 16. Sie kann insbesondere als Abdeckung aus Kunststoff oder Metall gebildet sein und schützt den Vergaser 3 zudem auch vor der Wärmeabstrahlung des Zylinders 1.

An der Trennwand 17 kann ein nicht dargestellter Flansch ausgebildet sein, zum Befestigen des Vergasers 3 an dem Flansch und damit an der Trennwand 17. Der Vergaser 3 kann damit in einfacher Weise an der Trennwand 17 gehalten werden. Zudem kann in dem Flansch eine Durchbrechung durch die Trennwand 17 vorgesehen sein, durch die das Luft-Kraftstoff-Gemisch vom Vergaser 3 zum Zylinder 1 geleitet werden kann.

Zusätzlich sind in Fig. 5 noch der Vollständigkeit halber Kraftstoffleitungen 18 gezeigt, über die Kraftstoff zu dem Vergaser 3 zugeführt bzw. - z.B. zum Entlüften der Membrankammer - abgeführt werden kann.

## Patentansprüche

1. Arbeitsgerät mit einem Verbrennungsmotor, wobei
- das Arbeitsgerät eine Stampfvorrichtung zur Bodenverdichtung mit einem Stampfwerk oder ein motorbetriebener Bohr- und/oder Schlaghammer mit einem Schlagwerk ist; und wobei
der Verbrennungsmotor vorgesehen ist, mit
- einem Zylinder (1), in dem ein Kolben axial hin und her beweglich ist, um eine Motorwelle (2) drehend anzutreiben;
- einer Vergasereinrichtung (3) zum Erzeugen eines Luft-Kraftstoff-Gemischs für einen Verbrennungsvorgang in dem Zylinder (1);
- einer Lüftereinrichtung (5) zum Erzeugen eines Kühlluftstroms (11);
- einer Kühlluftführung (7) zum Führen des von der Lüftereinrichtung (5) erzeugten Kühlluftstroms (11);
- einem Strömungsteiler (12) zum Aufteilen des Kühlluftstroms (11) in einen Zylinder-Kühlluftstrom (13) und in einen Vergaser-Kühlluftstrom (14);
- einer Zylinder-Kühlluftstromführung (15) zum Führen des Zylinder-Kühlluftstroms (13) zu einer Außenwand des Zylinders (1); und mit
- einer Vergaser-Kühlluftstromführung (16) zum Führen des Vergaser-Kühlluftstroms (14) zu einer Außenwand der Vergasereinrichtung (3);
wobei
- die beiden Kühlluftströme (13, 14) getrennt voneinander zu dem Zylinder (1) und der Vergasereinrichtung (3) geführt werden, derart, dass der Zylinder-Kühlluftstrom (13) zu dem Zylinder (1) geführt wird, während der Vergaser-Kühlluftstrom (14) zu der Vergasereinrichtung (3) geführt wird;
- die Kühlluftführung (7) einen Gebläsedeckel (8) aufweist;
- der Gebläsedeckel (8) wenigstens teilweise die Lüftereinrichtung (5) umschließt;
- in dem Gebläsedeckel (8) die Zylinder-Kühlluftstromführung (15) und die Vergaser-Kühlluftstromführung (16) ausgebildet sind;
- der Gebläsedeckel (8) mehrere Lufteinlässe (9) in Form von kreissegmentförmigen Luftschlitzen aufweist, über die durch die Lüftereinrichtung (5) Umgebungsluft (10) angesaugt wird; und wobei
- zwischen dem Zylinder (1) und der Vergasereinrichtung (3) eine Trennwand (17) vorgesehen ist, zum Aufrechterhalten der Trennung des Vergaser-Kühlluftstroms (14) von dem Zylinder-Kühlluftstrom (13).

2. Arbeitsgerät nach Anspruch 1, wobei mehr als 80 Prozent des von der Lüftereinrichtung (5) erzeugten Kühlluftstroms (11) als Zylinder-Kühlluftstrom (13) weiter geführt wird, während der Rest des Kühlluftstroms (11) als Vergaser-Kühlluftstrom (14) weiter geführt wird.

3. Arbeitsgerät nach Anspruch 1 oder 2, wobei die Luftströme durch die Zylinder-Kühlluftstromführung (15) und die Vergaser-Kühlluftstromführung (16) jeweils um 90 Grad umgelenkt werden.

4. Arbeitsgerät nach einem der vorstehenden Ansprüche, wobei
- die Vergasereinrichtung (3) einen kraftstoffführenden Bereich aufweist, der durch eine Vergaser-Außenwand abgedeckt ist; und wobei
- der Vergaser-Kühlluftstrom (14) derart geführt ist, dass er auf die Vergaser-Außenwand trifft.

5. Arbeitsgerät nach einem der vorstehenden Ansprüche, wobei
- die Lüftereinrichtung (5) ein Lüfterrad (6) aufweist;
- das Lüfterrad (6) in einer ersten Ebene liegt; und wobei
- die Vergasereinrichtung (3), der Zylinder (1) und ein sich an den Zylinder anschließendes Kurbelgehäuse (1a) in einer zu der ersten Ebene parallelen zweiten Ebene angeordnet sind.

6. Arbeitsgerät nach einem der vorstehenden Ansprüche, wobei
- durch die Motorwelle (2) eine Arbeitsvorrichtung antreibbar ist;
- wirkungsmäßig zwischen der Motorwelle (2) und der Arbeitsvorrichtung eine Kupplung vorgesehen ist, zum Unterbrechen oder Schließen eines Drehmomentflusses von der Motorwelle (2) zu der Arbeitsvorrichtung; und wobei
- die Kupplung in einer zu der ersten und der zweiten Ebene parallelen dritten Ebene angeordnet ist.

7. Arbeitsgerät einem der vorstehenden Ansprüche, wobei
- der Vergaser-Kühlluftstrom (14) und der Zylinder-Kühlluftstrom (13) bei einem bestimmungsgemäßen Gebrauch des Arbeitsgeräts von einem das Arbeitsgerät haltenden Bediener weggeführt werden.

## Claims

1. Work device comprising a combustion motor, wherein
- the work device is a tamping apparatus for ground compaction having a tamping unit or a motor-operated drill hammer and/or impact hammer having a tamping unit; and wherein
the combustion motor is provided, having
- a cylinder (1) in which a piston is movable axially in a reciprocating manner in order to rotationally drive a motor shaft (2);
- a carburettor device (3) for producing an air-fuel mixture for a combustion procedure in the cylinder (1);
- a fan device (5) for producing a cooling air flow (11);
- a cooling air guide (7) for guiding the cooling air flow (11) produced by the fan device (5);
- a flow splitter (12) for splitting the cooling air flow (11) into a cylinder cooling air flow (13) and into a carburettor cooling air flow (14);
- a cylinder cooling air flow guide (15) for guiding the cylinder cooling air flow (13) to an outer wall of the cylinder (1); and having
- a carburettor cooling air flow guide (16) for guiding the carburettor cooling air flow (14) to an outer wall of the carburettor device (3);
wherein
- the two cooling air flows (13, 14) are guided separately from one another to the cylinder (1) and the carburettor device (3) such that the cylinder cooling air flow (13) is guided to the cylinder (1), whereas the carburettor cooling air flow (14) is guided to the carburettor device (3);
- the cooling air guide (7) has a blower cover (8);
- the blower cover (8) encloses the fan device (5) at least partially;
- the cylinder cooling air flow guide (15) and the carburettor cooling air flow guide (16) are formed in the blower cover (8);
- the blower cover (8) has a plurality of air inlets (9) in the form of circular segment-shaped air slits, via which ambient air (10) is drawn in by the fan device (5); and wherein
- a partition wall (17) is provided between the cylinder (1) and the carburettor device (3) in order to maintain the separation of the carburettor cooling air flow (14) from the cylinder cooling air flow (13).

2. Work device as claimed in claim 1, wherein more than 80 percent of the cooling air flow (11) produced by the fan device (5) is guided further as cylinder cooling air flow (13), whereas the rest of the cooling air flow (11) is guided further as carburettor cooling air flow (14).

3. Work device as claimed in claim 1 or 2, wherein the air flows are deflected by the cylinder cooling air flow guide (15) and the carburettor cooling air flow guide (16) in each case by 90 degrees.

4. Work device as claimed in any one of the preceding claims, wherein
- the carburettor device (3) has a fuel-guiding region which is covered by a carburettor outer wall; and wherein
- the carburettor cooling air flow (14) is guided such that it impinges upon the carburettor outer wall.

5. Work device as claimed in any one of the preceding claims, wherein
- the fan device (5) has a fan wheel (6);
- the fan wheel (6) lies in a first plane; and wherein
- the carburettor device (3), the cylinder (1) and a crank housing (1a) which adjoins the cylinder are arranged in a second plane in parallel with the first plane.

6. Work device as claimed in any one of the preceding claims, wherein
- a drive apparatus can be driven by the motor shaft (2);
- a coupling is operatively provided between the motor shaft (2) and the work apparatus in order to interrupt or close a torque flow from the motor shaft (2) to the work apparatus; and wherein
- the coupling is arranged in a third plane in parallel with the first and the second plane.

7. Work device as claimed in any one of the preceding claims, wherein
- when the work device is used as specified, the carburettor cooling air flow (14) and the cylinder cooling air flow (13) are guided away by an operator holding the work device.

## Revendications

1. Engin de travail équipé d'un moteur à combustion interne,
l'engin de travail étant un dispositif d'écrasement pour le compactage du sol avec un mécanisme de bourrage ou un perforateur et/ou un marteau à percussion à moteur avec un outil de battage ; et le moteur à combustion interne étant pourvu
d'un cylindre (1) dans lequel un piston peut effectuer un mouvement de va-et-vient axial pour entraîner un arbre de moteur (2) en rotation ;
un dispositif de carburation (3) permettant de générer un mélange air-carburant pour un processus de combustion dans le cylindre (1) ;
un dispositif de ventilation (5) permettant de générer un flux d'air de refroidissement (11) ;
un circuit d'air de refroidissement (7) permettant de guider le flux d'air de refroidissement (11) généré par le dispositif de ventilation (5) ;
un diviseur de débit (12) permettant de diviser le flux d'air de refroidissement (11) en un flux d'air de refroidissement de cylindre (13) et un flux d'air de refroidissement de carburateur (14) ;
un circuit de flux d'air de refroidissement de cylindre (15) permettant de guider le flux d'air de refroidissement de cylindre (13) vers une paroi externe du cylindre (1) ; et pourvu de
un circuit de flux d'air de refroidissement de carburateur (16) permettant de guider le flux d'air de refroidissement de carburateur (14) vers une paroi externe du dispositif de carburation (3) ;
les deux flux d'air de refroidissement (13, 14) étant guidés séparément l'un de l'autre vers le cylindre (1) et le dispositif de carburation (3), de sorte que le flux d'air de refroidissement du cylindre (13) soit guidé vers le cylindre (1), tandis que le flux d'air de refroidissement du carburateur (14) soit guidée vers le dispositif de carburation (3) ; le circuit d'air de refroidissement (7) comportant un couvercle de ventilateur (8) ;
le couvercle de ventilateur (8) entourant au moins partiellement le dispositif de ventilation (5) ;
le circuit de flux d'air de refroidissement du cylindre (15) et le circuit de flux d'air de refroidissement du carburateur (16) étant formés dans le couvercle de ventilateur (8) ;
le couvercle de ventilateur (8) comportant une pluralité d'entrées d'air (9) sous la forme de fentes d'air en forme de segments circulaires à travers lesquels l'air ambiant (10) est aspiré par le dispositif de ventilation (5) ; et
une cloison (17) étant agencée entre le cylindre (1) et le dispositif de carburation (3) pour maintenir la séparation entre le flux d'air de refroidissement du carburateur (14) et le flux d'air de refroidissement du cylindre (13).

2. Engin de travail selon la revendication 1, plus de 80 pour cent du flux d'air de refroidissement (11) généré par le dispositif de ventilation (5) étant ensuite acheminé sous forme de flux d'air de refroidissement du cylindre (13), tandis que le reste du flux d'air de refroidissement (11) est ensuite acheminé en tant que flux d'air de refroidissement du carburateur (14).

3. Engin de travail selon la revendication 1 ou 2, les flux d'air étant chacun déviés de 90 degrés à travers le circuit de flux d'air de refroidissement du cylindre (15) et le circuit de flux d'air de refroidissement du carburateur (16).

4. Engin de travail selon l'une des revendications précédentes,
le dispositif de carburation (3) présentant une zone de circuit de carburant qui est recouverte par une paroi externe de carburateur ;
le flux d'air de refroidissement du carburateur (14) étant guidé de telle sorte qu'il rencontre la paroi extérieure du carburateur.

5. Engin de travail selon l'une des revendications précédentes, le dispositif de ventilation (5) présentant une roue de ventilateur (6) ;
la roue de ventilateur (6) se trouvant dans un premier niveau ; et
le dispositif de carburation (3), le cylindre (1) et un carter (1a) attenant au cylindre (1a) étant agencés dans un deuxième plan parallèle au premier plan.

6. Engin de travail selon l'une des revendications précédentes, un dispositif de travail pouvant être entraîné par l'arbre moteur (2) ; un embrayage étant agencé de manière fonctionnelle entre l'arbre du moteur (2) et le dispositif de travail pour interrompre ou fermer un flux de couple depuis l'arbre du moteur (2) vers le dispositif de travail ; et
l'embrayage étant disposé dans un troisième plan parallèle aux premier et deuxième plans.

7. Engin de travail selon l'une des revendications précédentes,
le flux d'air de refroidissement du carburateur (14) et le flux d'air de refroidissement du cylindre (13) étant éloignés par un opérateur tenant l'engin de travail lorsque celui-ci est utilisé comme prévu.
